## Europäisches Patentamt

## European Patent Office

## Office européen des brevets

(11) Veröffentlichungsnummer: **0 167 096**
**A2**

(12) # EUROPÄISCHE PATENTANMELDUNG

(21) Anmeldenummer: **85107881.6**

(22) Anmeldetag: **25.06.85**

(51) Int. Cl.⁴: **F 24 D 11/00**
**F 24 D 11/02**

(30) Priorität: **02.07.84 DE 3424298**
**02.07.84 DE 3424315**
**30.03.85 DE 3511725**

(43) Veröffentlichungstag der Anmeldung:
**08.01.86 Patentblatt 86/2**

(84) Benannte Vertragsstaaten:
**AT BE CH DE FR GB IT LI LU NL SE**

(71) Anmelder: **Kronauer, Dieter**
**Hellendorfer Weg 20**
**D-3002 Wedemark 1(DE)**

(72) Erfinder: **Kronauer, Dieter**
**Hellendorfer Weg 20**
**D-3002 Wedemark 1(DE)**

(74) Vertreter: **Junius, Walther, Dr.**
**Wolfstrasse 24**
**D-3000 Hannover 81(DE)**

(54) **Klimaanlage mit einer Specherheizung.**

(57) An einer Speicherheizung, bestehend aus mindestens einem Speicherelement und mindestens einem Gebläse soll die Aufgabe gelöst werden, eine einfach aufgebaute Speicherheizung zu schaffen, die mit allen möglichen billigen Wärmequellen zu speisen ist, langzeitig ohne Wärmeverluste zu speichern imstande ist und deren entleerte Speicher leicht zu regenerieren sind. Die Erfindung löst diese Aufgabe dadurch, daß das Speicherelement ein Adsorber in Form eines Gefäßes ist, in dem sich ein Feuchtigkeit aus Luft adsorbierendes Material befindet, und daß dieser Adsorber in zwei Rohrleitungskreise geschaltet ist, einen Rohrleitungskreis für den Heizbetrieb, mit einem Luft einlaß und einem Luftbefeuchter vor dem Adsorber und einem Luftauslaß in den zu beheizenden Raum sowie einem Gebläse und einem zweiten Rohrleitungskreis für die Regenerierung mit einem Lufterhitzer, einer Kondensiervorrichtung und ebenfalls einem Gebläse, wobei in den Rohrleitungskreisen Ventile angeordnet sind, die entweder den einen oder den anderen Rohrleitungskreis an den Adsorber schalten. Diese Speicherheizung wird zu einer Vollklimaanlage dadurch weiter entwickelt, daß der Adsorber in einen dritten Rohrleitungskreis geschaltet oder schaltbar ist, in welchem vor dem Adsorber eine Ansaugvorrichtung für Umgebungsluft oder Raumluft angeordnet ist, in dem Adsorber oder unmittelbar hinter dem Adsorber ein Wärmetauscher als Kühlvorrichtung zur Abführung der beim Trocknungsvorgang freigesetzten Wärme angeordnet ist und hinter dem Adsorber und der Kühlvorrichtung ein Luftbefeuchter angeordnet ist.

./...

FIG. 1

0167096

## Klimaanlage mit einer Speicherheizung

Die Erfindung betrifft eine Klimaanlage mit einer Speicherheizung, bestehend aus mindestens einem Speicherelement und mindestens einem Gebläse.

Bekannt sind Nachtspeicheröfen, die aus elektrischen Heizelementen, von diesen erwärmten Steinen als Speicherelemente, einer Wärmeisolierung, einem Gehäuse und einem Gebläse bestehen, durch das Luft des zu beheizenden Raumes durch einen Lufteinlaß angesaugt, an den erwärmten Steinen vorbeigeleitet und erwärmt durch einen Luftauslaß wieder in den zu erwärmenden Raum herausgelassen wird. Diese Nachtspeicheröfen nutzen billigen Nachtstrom und geben die Wärme am Tage ab. Ihre Speicherfähigkeit ist begrenzt, denn noch so dicke Isolierungen vermögen die Auskühlung der erwärmten Steine nicht zu verhindern.

Andere Arten der Speicherung von erwärmtem Wasser oder anderen Flüssigkeiten haben sich als derart unwirtschaftlich erwiesen, daß sie in die Beheizungstechnik keinen Eingang gefunden haben.

Von dem physikalischen Phänomen, daß bei Verdunstung Wärme aufgenommen, bei der Kondensation

0167096

Wärme abgegeben, bei der Absorption von Feuchtigkeit Wärme abgegeben und bei der Entfeuchtung Wärme aufgenommen wird, macht man in der Technik der Beheizung von Räumen, Häusern, Fabrik- und Verwaltungsgebäuden keinen Gebrauch, obwohl dieses Phänomen seit langem bekannt ist.

Es ist die Aufgabe der Erfindung, eine einfach aufgebaute Klimaanlage mit einer Speicherheitung zu schaffen, die mit allen möglichen billigen Wärmequellen zu speisen ist, langzeitig ohne Wärmeverluste zu speichern imstande ist und deren entleerte Speicher leicht zu regenerieren sind.

Die Erfindung besteht darin, daß das Speicherelement ein Adsorber in Form eines Gefäßes ist, in dem sich ein Feuchtigkeit aus Luft adsorbierendes Material befindet und daß dieser Adsorber in zwei Rohrleitungskreise geschaltet ist, einen Rohrleitungskreis für den Heizbetrieb mit einem Lufteinlaß und einem Luftbefeuchter vor dem Adsorber und einem Luftauslaß in den zu beheizenden Raum sowie einem Gebläse, und einem zweiten Rohrleitungskreis für die Regenerierung, mit einem Lufterhitzer, einer Kondensiervorrichtung und ebenfalls einem Gebläse, wobei in den Rohrleitungskreisen Ventile angeordnet sind, die entweder den einen oder den anderen Rohrleitungskreis an den Adsorber schalten.

Diese Speicherheizung benutzt als Speicher ein Material, das aus Luft Feuchtigkeit adsorbiert und dabei Wärme abgibt, wie z.B. Alumosilikat $Al_2O_3 + SiO_2$, und das nach Feuchtigkeitsaufnahme durch trockene Warmluft problemlos und schnell wieder regenerierbar ist. Ein erster Rohrleitungskreis dient der Raumbeheizung, ein zweiter der Regenerierung. Im ersten, der Beheizung dienenden Rohrleitungskreis ist ein Luftbefeuchter, vorzugsweise ein Luftwäscher, angeordnet, der der zu erwärmenden Luft die für deren Erwärmung erforderliche Feuchtigkeit vermittelt. Ein derartiger Luftwäscher reinigt die Luft gleichzeitig. Im zweiten Rohrleitungskreis kann die Lufterwärmungsvorrichtung mit verschiedenen Wärmequellen betrieben werden, so diese die Luft auf etwa 60$^{o}$ erwärmen. Es kann Abfallwärme aus Industriebetrieben und Kraftwerken verwendet werden, die sonst oft in Kühlern vernichtet wird. Es kann Nachtstrom verwendet werden.

Dabei ist der apparative Aufwand relativ gering. Die Gefäße für das Feuchtigkeit absorbierende Material können von sehr einfacher Bauart sein, ebenso die Lufterwärmungs- und Kondensationsvorrichtung. Die übrigen Bauteile sind in Großserien hergestellte billige Gegenstände, die Ventile z.B., Schieber oder Luftklappen.

Bei der Speicherung geht Wärme nur in äußerst geringem Umfang verloren. Denn im Speichermaterial wird die Wärme erst durch den Zutritt von Feuchtigkeit freigesetzt. Daher kann das Speichermaterial beliebig lange ohne Wärmeverlust gelagert werden, wenn nur der Zutritt von Feuchtigkeit verhindert wird.

Diese Vorteile verleihen dieser Speicherheizung eine ganz hervorragende Wirtschaftlichkeit.

Für einen einfachen apparativen Aufbau der Speicherheizung ist es vorteilhaft, wenn in beiden Rohrleitungskreisen ein und dasselbe Gebläse montiert ist und wenn Ventile vorgesehen sind, mit denen das Gebläse in den einen oder den anderen Rohrleitungskreis einschaltbar ist. Dann ist für beide Rohrleitungskreise nur ein Gebläse erforderlich.

Für eine ausreichende Wärmebevorratung ist es zweckmäßig, wenn mehrere Speicherelemente nebeneinander aufgestellt sind und Ventile vorgesehen sind, mit denen jeweils ein Speicher nach dem anderen in den ersten Rohrleitungskreis einschaltbar ist. Dieses ist für die Regenerierung und deren Wirtschaftlichkeit ebenfalls von Vorteil.

Da billige Abfallwärmequellen meist ortsgebunden sind und sich an einem anderen Ort als die zu beheizenden Räume befinden, kann es zweckmäßig sein, wenn die Speicherelement auf beweglichen Untersätzen montiert sind und die beiden Rohrleitungskreise räumlich entfernt voneinander angeordnet sind. So können z.B. die Gefäße mit Alumosilikat oder einem ähnlichen Material auf Anhängern von Lastwagen oder auf Sattelschleppanhängern oder auf Eisenbahnwaggons montiert sein und der zweite Rohrleitungskreis kann sich in einer entfernten Industrieanlage oder in einem entfernten Kraftwerk befinden. Von hier aus werden die Gefäße bis zum ersten Rohrleitungskreis gefahren und dort an diesen angeschlossen. Das ist bei den heutigen Preisverhältnissen wirtschaftlich bis zu einer Entfernung von 60 km.

Stehen hingegen die Wärmequellen unmittelbar am Ort zur Verfügung oder wird mit Nachtstrom als Heizung gearbeitet, kann es zweckmäßig sein, wenn in jedem Gefäß eines Speicherelementes auf einer Seite eine Beheizungsvorrichtung - vorzugsweise oben -, auf der gegegenüberliegenden Seite eine Kondensationsvorrichtung - vorzugsweise unten - vorgesehen ist.

Vorteilhaft ist es, wenn die Kondensationsvorrichtung als Wärmetauscher ausgebildet ist. Die hier anfallende Wärme kann in verschiedener Weise genutzt werden.

Besonders zweckmäßig ist es jedoch, diese Wärme wieder zur Beheizung der dem Adsorber zuzuführenden Trocknungsluft zu benutzen. Das kann z.B. dadurch erfolgen, daß zwischen Kondensationsvorrichtung und Heizvorrichtung eines Speicherelementes eine Wärmepumpe geschaltet ist.

Vorteilhaft ist es, den ersten Rohrleitungskreis in dem zu beheizenden Raum dadurch zu schließen, daß der Lufteinlaß des ersten Rohrleitungskreises im zu beheizenden Raum angeordnet ist und in den zu beheizenden Raum über eine andere Anlage Frischluft zuzuführen und verbrauchte Luft abzuführen.

Zum Schutz der Anlage und des der Luft Feuchtigkeit entziehenden Materials ist es zweckmäßig, wenn dem Lufteinlaß ein Luftfilter nachgeschaltet ist.

Nun besteht aber nicht nur im Winter das Bedürfnis, Räume durch Heizung mit optimal befeuchteter Luft zu klimatisieren, sondern es besteht an heißen Sommertagen auch das Bedürfnis, Räume mit optimal befeuchteter Luft zu kühlen.

Es gibt eine Möglichkeit bei der vorliegenden Erfindung die Speicherheizung mit geringem zusätzlichen Aufwand so zu gestalten, daß sie ohne ihre hervorragenden technischen und wirtschaftlichen Leistungen im Winter zur Heizung zu verlieren, im Sommer unter Verwendung des wesentlichen Teiles ihrer Arbeitsmittel als Kühlvorrichtung dienen kann, so daß aus ihr eine Anlage zur Vollklimatisierung von Räumen entsteht.

Die Erfindung besteht darin, daß der Adsorber in einen dritten Rohrleitungskreis geschaltet oder schaltbar ist, in welchem vor dem Adsorber eine Ansaugvorrichtung für Umgebungsluft oder Raumluft angeordnet ist, in dem Adsorber und unmittelbar hinter dem Adsorber ein Wärmetauscher als Kühlvorrichtung zur Abführung der beim Trocknungsvorgang freigesetzten Wärme angeordnet ist und hinter dem Adsorber und der Kühlvorrichtung ein Luftbefeuchter angeordnet ist.

Hierbei werden zusätzlich zu den physikalischen Phänomenen, daß bei der Adsorption von Feuchtigkeit Wärme abgegeben und bei der Entfeuchtung Wärme aufgenommen wird, die Phänomene in Anwendung gebracht, daß bei Verdunstung Wärme aufgenommen und bei der Kondensation Wärme abgegeben wird. Denn hier wird im Adsorber bzw. im Adsorberbereich die Luft isotherm getrocknet und anschließend in einem Luftbefeuchter adiabatisch gekühlt. Dabei ist es lediglich notwendig, im Adsorber oder unmittelbar hinter dem Adsorber einen Wärmetauscher, vorzugsweise in Form einer Rohrschlange, anzuordnen, um die im Adsorber anfallende Wärme abzuführen. Dazu kann z.B. Grundwasser dienen, es besteht aber auch die Möglichkeit, hier Brauchwasser zu erwärmen, das als Badewasser und als Waschwasser verwendet werden kann. Durch diese sehr einfache Kühlvorrichtung, die lediglich einer Kühlschlange und einer Wasserpumpe bedarf und bei der evtl. noch ein oder mehrere Ventile einzubauen sind, kann die Speicherheizung zu einer Vollklimaanlage ausgestaltet werden. Das vorhandene Rohrleitungsnetz sowie der vorhandene Luftbefeuchter können hierbei verwendet werden.

Vorteilhaft ist es, wenn mindestens zwei Adsorbergefäße vorhanden sind, von denen das eine in den dritten Rohrleitungskreis und das andere in den zweiten Rohrleitungskreis geschaltet ist. Mit diesen zwei Adsorbergefäßen kann gleichzeitig gekühlt und regeneriert werden, während das eine Adsorbergefäß im dritten Rohrleitungskreis in Zusammenwirken mit dem Luftbefeuchter als Kühllufterzeuger dient, wird in dem anderen Adsorbergefäß die Adsorbermasse regeneriert.

Hierbei ist es zweckmäßig, wenn der Lufterhitzer des zweiten Rohrleitungskreises eine solare Energie in Wärme umsetzende Vorrichtung ist. Denn die Kühlung wird in einem Gebäude meist dann erforderlich, wenn die Sonne scheint. Die von der Sonne erzeugte solare Energie kann dabei benutzt werden, um das nicht im Kühlkreis befindliche Adsorbergefäß mit seinem Inhalt zu regenerieren. Die hier verwendete solare Energie kann einfach erwärmte Luft, wie sie unter Dächern leicht erhältlich ist, sein.

Der Lufterhitzer des zweiten Rohrleitungskreises kann aber auch eine Abfallwärmequelle sein, z.B. die Abfallwärme einer in einer Kühlvorrichtung arbeitenden Wärmepumpe oder Abfallwärme aus Feuerungsanlagen und dergleichen.

Für diese Klimaanlage ist es wichtig, einen höchst einfach aufgebauten Wärmetauscher hohen Wirkungsgrades zu haben, der für die Nutzung von Abfallwärmequellen und für die Anwendung bisher nicht genutzter Speichermöglichkeiten geeignet ist.

Ein solcher Wärmetauscher läßt sich dadurch realisieren, daß das Gefäß mindestens einen Siebboden enthält, daß oberhalb jedes Siebbodens ein Zulauf- und ein Ablaufstutzen für Wasser angeordnet ist und daß unter dem untersten Siebboden ein Luftzufuhrstutzen angeordnet ist.

Ein derartiger Wärmetauscher zeichnet sich durch einen besonders hohen Wirkungsgrad aus, der über 94% liegen kann, weil die wärmeabgebende Luft durch den Siebboden in sehr viele Luftblasen kleinen Durchmessers geteilt wird und dadurch eine große Oberfläche entwickelt wird, über die die Luft ihre Wärme abgibt.

In Niedertemperatur-Heizungsanlagen entwickelt
der in das Wasser aus der Luft eingetragene Sauerstoff nicht die Korrosionswirkungen, die er bei
Hochtemperaturanlagen aufweist. Niedertemperatur-
Heizungsanlagen sind aber auch dazu prädestiniert,
aus Kunststoffbauteilen aufgebaut zu sein. Sauerstoffreiches Heizungswasser niedriger Temperatur
übt hier kaum Korrosionswirkungen aus. Daher ist
der erfindungsgemäße Wärmetauscher insbesondere
für Niedertemperatur-Heizungsanlagen geeignet.
Er bringt die Möglichkeit mit sich, auch Abfallwärmequellen zu nutzen, die bisher nicht benutzbar waren.

Der erfindungsgemäße Wärmetauscher kann auch dort
eingesetzt werden, wo ein geschlossener Luftkreislauf und ein geschlossener Wasserkreislauf
vorhanden sein sollen, die sich im Wärmetauscher
berühren. In diesem Falle ist es zweckmäßig, wenn
das Gefäß geschlossen ist und wenn über dem obersten Siebboden ein Luftabfuhrstutzen angeordnet ist.

Für die Erzielung hoher Wirkungsgrade bei kurzen
Verweilzeiten im Wärmetauscher ist es zweckmäßig,
wenn jeweils ein in einer höheren Etage angeordneter
Wasserablaufstutzen mit einem in einer darunter gelegenen Etage angeordneten Wasserzulaufstutzen
verbunden ist. Denn dann bewegen sich Wasser und
Luft im Gegenstrom.

Damit über jedem Siebboden immer genug zu erwärmendes Wasser steht, ist es zweckmäßig, wenn in vorgegebenem Abstand oberhalb jedes Siebbodens ein Geber eines Pegelmeßgerätes angeordnet ist und wenn in der Leitung, die vom darüber angeordneten Siebboden in den Raum unterhalb dieses Siebbodens führt, ein diesem Pegelmeßgerät zugeordnetes Ventil angeordnet ist.

Der erfindungsgemäße Wärmetauscher befeuchtet während des Wärmetausches selbst trockene Luft so stark, daß die Luft mit einem Feuchtigkeitsgehalt von 100% oder nahezu 100% den Wärmetauscher verläßt. Das prädestiniert diesen Wärmetauscher für den Einsatz in einer Speicherheizung mit dem bisher nicht benutzten Speichermedium, das bei Feuchtigkeitsaufnahme Wärme abgibt, wie das bei Alumosilikat $Al_2O_3 + SiO_2$ der Fall ist. In diesem Falle ist es zweckmäßig, wenn der Luftabfuhrstutzen des Siebbodengefäßes mit dem Lufteingangsstutzen eines Adsorbergefäßes verbunden ist, das mit einem der Luft Feuchtigkeit entziehenden Material, das beim Feuchtigkeitsentzug Wärme abgibt, gefüllt ist, und wenn der Lufteingangsstutzen des Siebbodengefäßes mit dem Luftausgangsstutzen des Adsorbergefäßes verbunden ist. Hierdurch entstehen zwei geschlossene Kreisläufe, einer für Wasser, einer für Luft, die sich lediglich im Wärmetauscher miteinander mischen, dort aber auch wieder voneinander getrennt werden.

Der Adsorber ist dabei entweder abnehmbar und austauschbar in die Anlage eingebaut, damit er für eine Regenerierung ausgetauscht werden kann, oder er ist mit Ventilen so aus dem Kreislauf ausschaltbar, daß er in einen Regenerationskreislauf einschaltbar ist.

Vorteilhaft ist es, wenn der Sieblochdurchmesser
3 mm beträgt.

Das Wesen der Erfindung ist nachstehend anhand
von in der Zeichnung schematisch dargestellten Ausführungsbeispielen näher erläutert. Es zeigen im
Blockschaltbild:

Fig. 1 eine mit Nachtstrom betriebene Anlage für
eine Industriehallenbeheizung,

Fig. 2 eine ähnliche Anlage, bei der die Erhitzer
und Kondensatoren im Adsorbergefäß untergebracht sind,

Fig. 3 eine mit Abfallwärme betriebene Anlage,
deren erster Rohrleitungskreis in einem
Verwaltungsgebäude und deren zweiter Rohrleitungskreis in einem entfernten Industriebetrieb befindlich ist, zwischen denen die
Adsorber hin- und hergefahren werden,

Fig. 4 eine erfindungsgemäß zur Vollklimaanlage
ausgebaute Speicherheizung,

Fig. 5 die Kühlvorrichtung während des Kühlbetriebes,

Fig. 6 die Kühlvorrichtung während des Regenerationsbetriebe,

Fig. 7 eine Vorrichtung, in der gleichzeitig gekühlt und regeneriert wird,

Fig. 8 einen Schnitt durch einen einstufigen
Wärmetauscher,

Fig. 9 einen Schnitt durch einen mehrstufigen
Wärmetauscher,

Fig.10 einen Schnitt durch eine aus Wärmetauscher
und Speicher bestehende Anlage.

In dem zu beheizenden Raum 1 befindet sich der Luftansaugstutzen 2 als Lufteinlaß in das erste Rohrsystem. Die hier angesaugte Luft wird in dem Rohr 3 durch ein Luftfilter 4 und das Rohr 31 von dem Gebläse 5 gefördert und dann durch das Rohr 32 in einen Naßwäscher 6 gedrückt und von dort über das Rohrstück 33 in die Adsorbergefäße 71,72,73 geleitet. In diesen befindet sich jeweils zwischen zwei gelochten Böden 74 ein Material 75, das der Luft Feuchtigkeit entzieht und dabei die Luft erwärmt. Diese erwärmende Luft wird durch die Rohrleitung 8 und den Lufteinlaßstutzen 11 dem Raum 1 zugeführt.

Der erste Rohrleitungskreis besteht somit aus den Rohren 3,31,32,33 und 8, verläuft über die Adsorber 71,72,73 und durch das Filter 4, das Gebläse 5 und den Luftwäscher 6.

Im Rohr 8 befindet sich das Ventil 9, z.B. ein Schieber oder eine Luftklappe, mit dem die Luftzufuhr zum Luftzufuhrstutzen 11 im Raum 1 unterbrochen werden kann. In dem Rohr 3 oder 31 kann sich ein weiteres Ventil 10 zur Abtrennung der Adsorber 71,72,73 von dem Raum 1 befinden. Diese Ventile 9,10 sind im Heizbetrieb geöffnet, im Regenerationsbetrieb geschlossen.

Die Regenration erfolgt über einen zweiten Rohrleitungskreis mit den Rohren 12,13,14,15 sowie den zu den Adsorbern 71,72,73 führenden Rohren 32,33,8. In diesem Rohrleitungsstrang sind als wesentliche Bauteile eine mit Nachtstrom beheizte Lufterhitzungsvorrichtung 34 und eine weitere Lufterhitzungsvorrichtung 16 und eine Kondensationsvorrichtung 17 eingebaut. Die Kondensationsvorrichtung
17 ist zweckmäßigerweise ein Wärmetauscher. Die
hier der feuchten Luft entzogene Wärme kann z.B.
über die Wärmepumpe 18 der Lufterhitzungsvorrichtung 16 zugeführt werden.

Die Rohrleitung 15 ist vorgesehen, um im Regenerationsbetrieb der Anlage den Luftwäscher 6 zu umgehen.

Im zweiten Rohrleitungssystem sind zwei Ventile
19,20 vorgesehen, die im Regenerationsbetrieb geöffnet und im Heizbetrieb geschlossen sind. Diese
Ventile 19,20 sowie das Rohrleitungsstück 15 ermöglichen es, einen Teil der Rohrleitungen 32,33,8
sowie das Gebläse 5 in beiden Rohrleitungskreisen
gemeinsam zu benutzen.

Den Adsorbergefäßen 71,72,73 sind Ventile 21,22,23
zugeordnet, von denen jeweils eines nur geöffnet
ist. Nach Leerung eines Adsorbers vom gespeicherten
Wärmeinhalt wird dieses Ventil geschlossen und ein
anderes geöffnet.

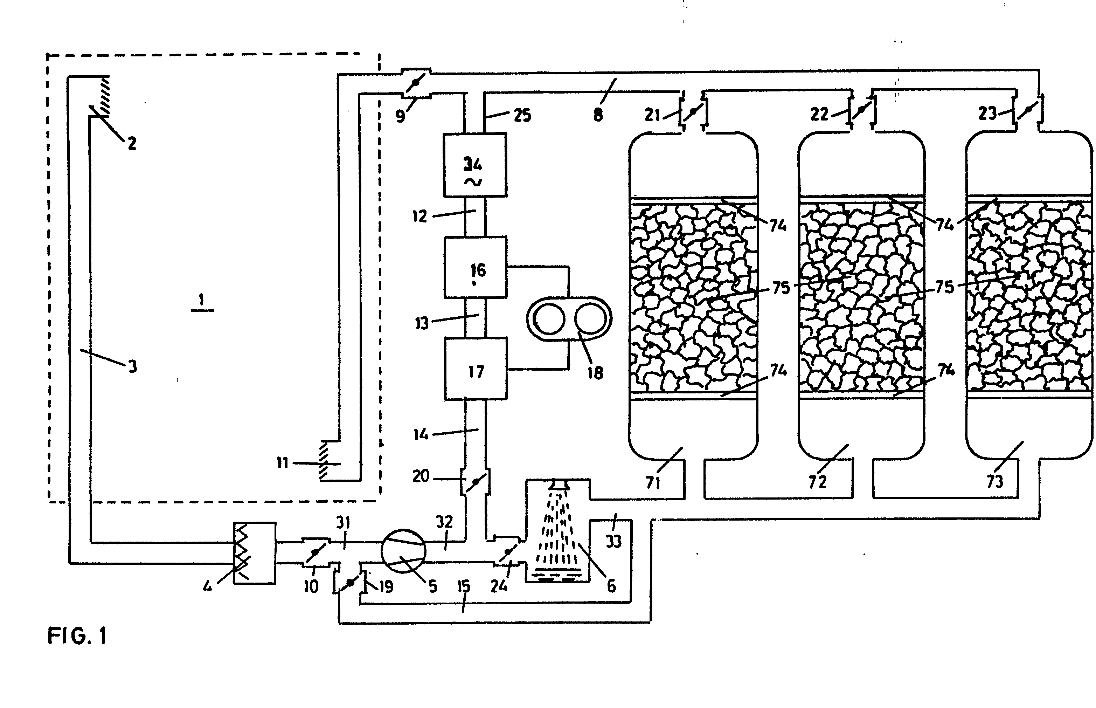

Die Anlage der Fig. 1 funktioniert folgendermaßen:

Durch das Gebläse 5 wird im Heizbetrieb Luft über
den Lufteinlaß 2 aus dem Raum1und über das Filter
4 angesaugt und durch den Wäscher 6 als Luftbefeuchtungsvorrichtung in die Adsorbergefäße 71 oder 72
oder 73 gedrückt. Hier in den Adsorbergefäßen 72,71,
73 wird durch Luftentfeuchtung die Luft erwärmt.
Die erwärmte Luft wird durch die Leitung 8 in den Luftauslaßstutzen 11 und damit in den Raum 1 geleitet. Dabei sind die Ventile 9,10 in den Leitungen 3,8 geöffnet. Die Ventile 19,20 des zweiten Rohrleitungskreises sind geschlossen. Von den Ventilen 21,22,23 wird immer nur eines 21 geöffnet, bis der Wärmeinhalt einem Adsorber 71 entnommen ist, dann wird das nächste Ventil 22 geöffnet und dieses Ventil 21 geschlossen. Entsprechend wird nach Leerung des Adsorbers 72 mit dem Ventil 23 verfahren.

Für die Regenerierung der Adsorber 71,72,73 werden die Ventile 9,10,24 geschlossen und die Ventile 19,20 geöffnet. Das Gebläse 5 wälzt nunmehr Luft durch den zweiten Rohrleitungskreis 33,15,14,13, 12,8 um. Die in den Lufterhitzern 16,34 erhitzte trockene Luft streicht durch einen der Adsorber 71,72,73 und nimmt Feuchtigkeit auf. Diese feuchte Luft wird der Kondensationsvorrichtung 17 zugeführt. Dort wird sie gekühlt und dort wird ihr die Feuchtigkeit entzogen. Durch das Rohr 13 gelangt dann die abgekühlte trockene Luft in die Lufterhitzungsvorrichtung 34 und 16 und strömt dann weiter wieder in den Adsorber 71 und setzt den Kreislauf fort.

Nach Regeneration des ersten Adsorbers 71 wird dann auf den zweiten Adsorber 72, danach auf den nächsten Adsorber 73 umgeschaltet.

Zur Erzeugung der notwendigen Abkühlung in der Kondensierungsvorrichtung 17 und der notwendigen Erhitzung des Lufterhitzers 16 dient eine Wärmepumpe bzw. Kältemaschine 18, die in der Kondensationsvorrichtung 17 der umgewälzten Luft entzogene Wärme der Lufterhitzungsvorrichtung 16 zuführt.

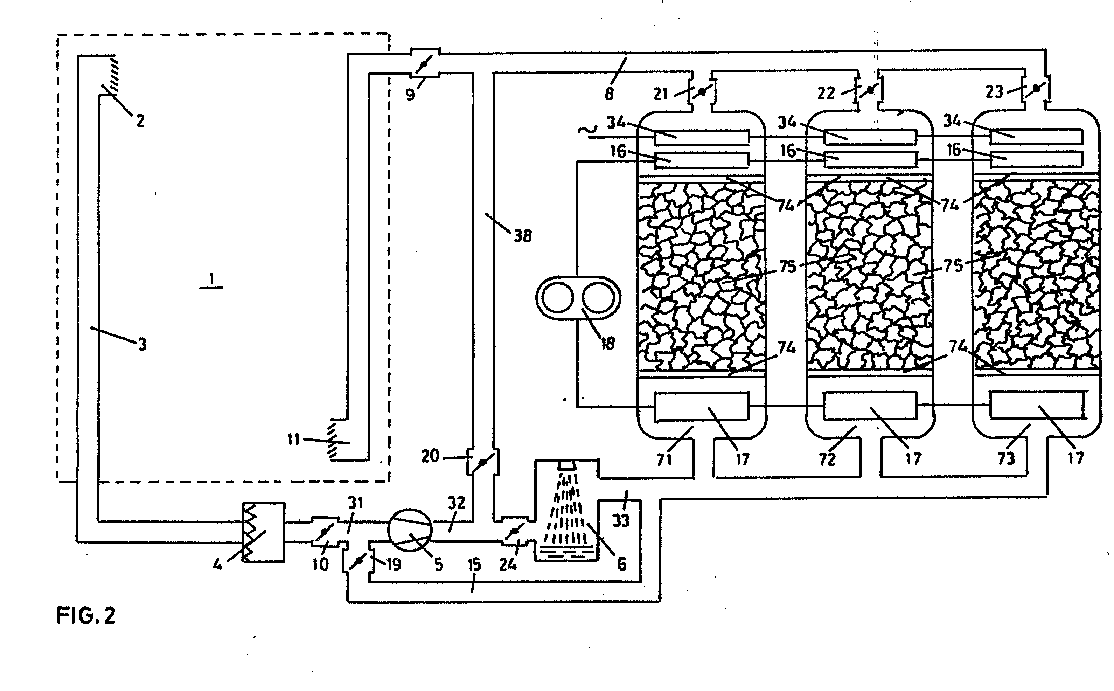

Die Anlage der Fig. 2 unterscheidet sich von der der Fig. 1 dadurch, daß in jedem Adsorbergefäß eben die Lufterhitzungsvorrichtung 16 und unten die Kondensationsvorrichtung 17 angeordnet ist. Dadurch tritt anstelle des Rohrleitungszweiges 12,13,14 die Leitung 38. Eine derartige Anlage arbeitet vornehmlich mit Nachtstrom und weist zusätzliche Beheizungsvorrichtungen 26 auf.

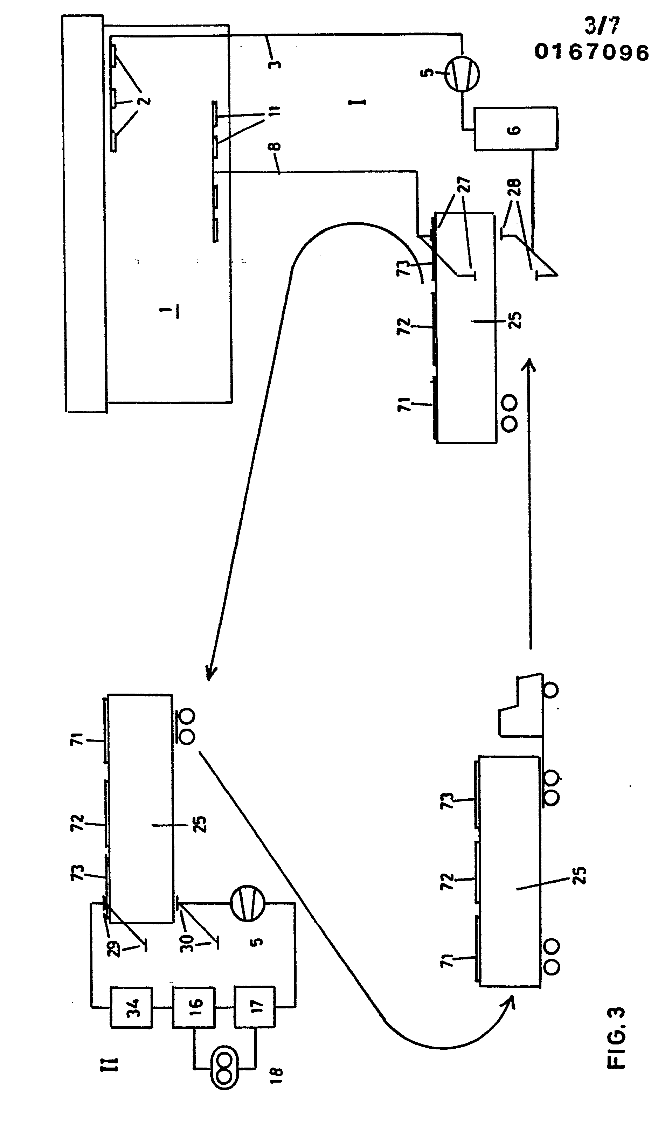

Die Anlage der Fig. 3 weist den ersten Rohrleitungskreis I an einem anderen Ort als den Rohrleitungskreis II auf. Zwischen beiden Kreisen werden die auf Sattelzuganhänger 25 montierten Adsorbergefäße 71,72,73 zwischen den Kreisen I und II hin- und hergefahren, von Kreis II nach Kreis I mit getrocknetem Material und somit wärmebeladen, von Kreis I nach Kreis II mit nassem Adsorbermaterial nach Abgabe der latenten Wärme. Zur Erleichterung der Arbeiten des Anschließens der Adsorber 71,72,73 an die Kreise I und II sind in jedem Kreis mindestens zwei Anschlußstationen 27,28 und 29,30 vorgesehen.

Diese Anlage arbeitet ähnlich wie die in Fig. 1, jedoch können Heizungsbetrieb und Regenerierung gleichmäßig und unabhängig voneinander erfolgen.

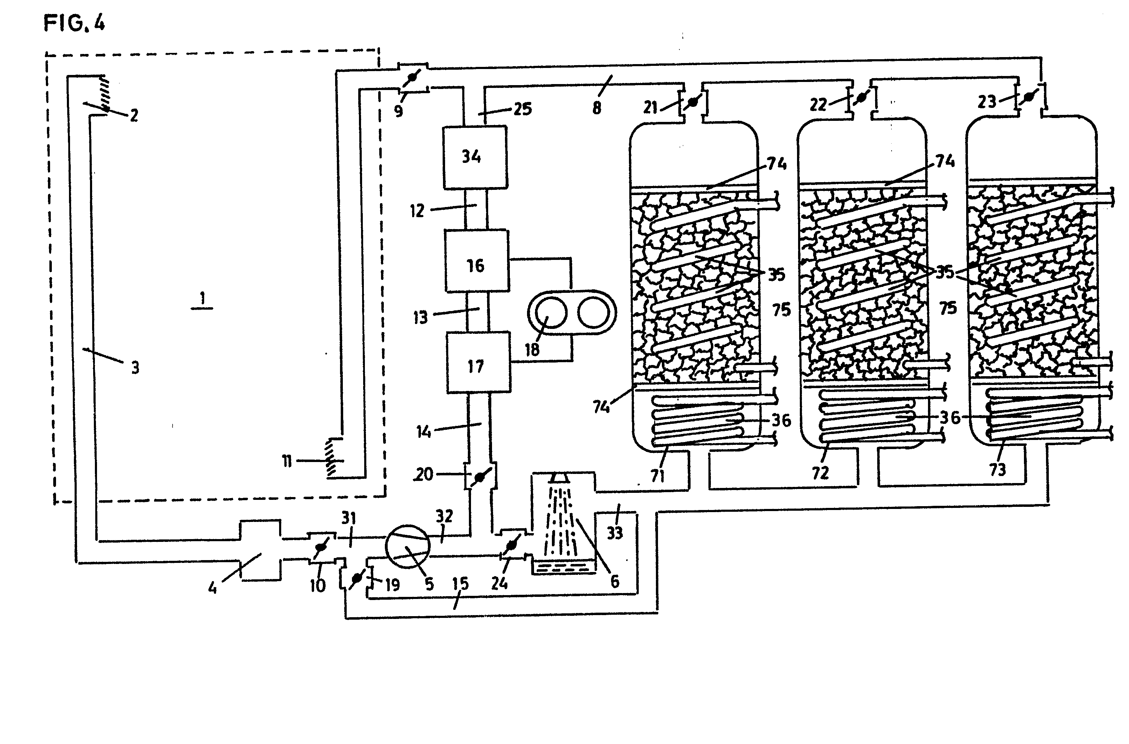

Soll diese Anlage, die im Winter als Speicherheizung arbeitet, im Sommer der Raumkühlung dienen, so wird sie entsprechend den Fig. 4 bis 7 ausgestaltet:

In dem zu beheizenden Raum 1 befindet sich der Luftansaugstutzen 2 als Lufteinlaß in das erste Rohrsystem. Die hier angesaugte Luft wird in dem Rohr 3 durch ein Luftfilter 4 und das Rohr 31 von dem Gebläse 5 gefördert und dann durch das Rohr 32 in einen Luftwäscher 6 gedrückt und von dort über das Rohrstück 33 in die Adsorbergefäße 71,72,73 geleitet.

Innerhalb des Adsorbergefäßes ist eine Kühlschlange 35 untergebracht, die sich zwischen dem Adsorptionsmaterial 75 befindet. Durch diese Kühlschlange 35 wird ein Kühlmedium, z.B. Grundwasser, hindurchgeleitet. Unterhalb der Adsorbermasse kann sich noch eine weitere Kühlschlange 36 befinden. Diese Kühlschlange 35 bzw. diese Kühlschlangen 35,36 machen aus der Speicherheizung eine Vollklimaanlage.

Die Anlage der Fig. 4 funktioniert im Heizbetrieb so, wie zu Fig. 1 bis 3 erläutert, im Kühlbetrieb folgendermaßen:

Soll die Anlage der Kühlung von Räumen dienen, so wird durch Umkehrung der Luftfördervorrichtung des Ventilators 5 Luft aus dem Adsorbergefäß 71,72,73 angesaugt und durch die Luftbefeuchteranlage 6 in die Rohrleitung 3 geleitet, wo sie durch den Stutzen 2 in den Raum 1 austritt. Angesaugt wird die Luft durch den Rohrstutzen 11 in die Rohrleitung 8, von wo die Luft in das Adsorbergefäß 71,72,73 eintritt. Hier im Adsorbergefäß wird die Luft isotherm getrocknet, wobei Wärme frei wird, die durch die Kühlrohrschlangen 35,36 abgeführt wird, so daß im wesentlichen ein isothermer Trocknungsvorgang stattfindet. Die trockene Luft wird dann dem Luftbefeuchter 6 zugeführt, einem Luftwäscher, der adiabatisch arbeitet. Durch die Befeuchtung der trockenen Luft wird diese gekühlt und erhält gleichzeitig ihre optimale Luftfeuchtigkeit.

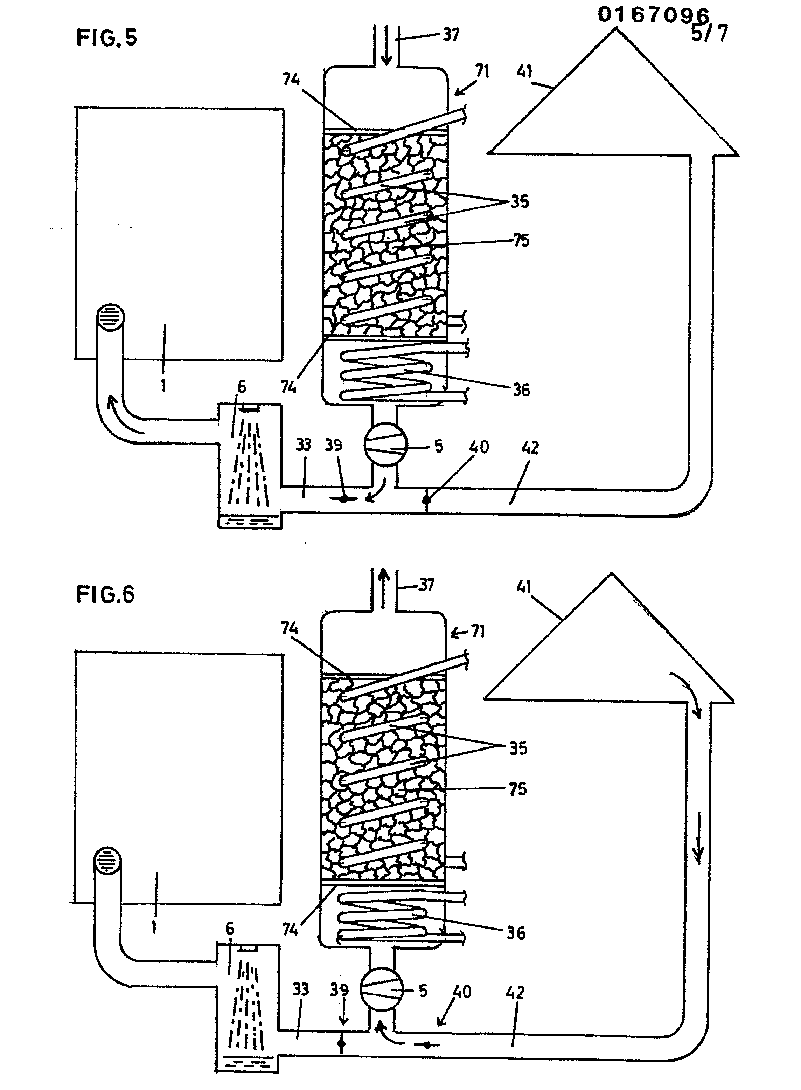

Der Kühlvorgang kann am Ausführungsbeispiel der Fig. 5 und 6 noch besser ersehen werden: In das Adsorbergefäß 71 wird durch den Rohrstutzen 37 Luft angesaugt, und zwar entweder Luft aus der freien Atmosphäre bei einem offenen Kühlkreis oder Luft aus dem zu kühlenden Raum bei einem geschlossenen Kühlkreis. Diese Luft wird im Adsorbergefäß 71 durch die Adsorptionsmasse 75 entfeuchtet. Bei diesem Entfeuchtungsvorgang entsteht Wärme, die über die Kühlschlange 35 und das Kühlregister 36 abgeführt wird. Die entfeuchtete Luft wird über den Ventilator 5 dem Wäscher 6 zugeführt. Während in dem Adsorptionsgefäß der Entfeuchtungsvorgang nahezu isotherm verläuft, verläuft der Befeuchtungsvorgang im Luftwäscher 6 adiabatisch, so daß hier die Lufttemperatur durch die adiabatische Befeuchtung abgesenkt wird. Die feuchte Kühlluft wird dem Raum 1 zugeführt. Das ist aus Fig. 5 ersichtlich, wo das in der Rohrleitung 33 liegende Ventil 39 geöffnet ist, während das im Weg von der Abfallwärmequelle liegende Ventil 40 geschlossen ist.

Als Abfallwärmequelle dient hier durch solare Energie aufgeheizte Luft, die sich unter dem Dach 41 eines Hauses gesammelt hat und die durch die Rohrleitung 42 dem Adsorbergefäß 71 in der Regenerationsphase (Fig. 6) zugeführt wird. Während der Regenerationsphase ist das Ventil 40 geöffnet, das Ventil 39 geschlossen und der Ventilator 5 arbeitet mit umgekehrter Förderrichtung, so daß die in das Adsorbergefäß 71 aus der Rohrleitung 42 zugeführte Warmluft unter Mitnahme von Feuchtigkeit aus dem Adsorbermaterial 75 aus dem Stutzen 37 in die freie Atmosphäre austritt.

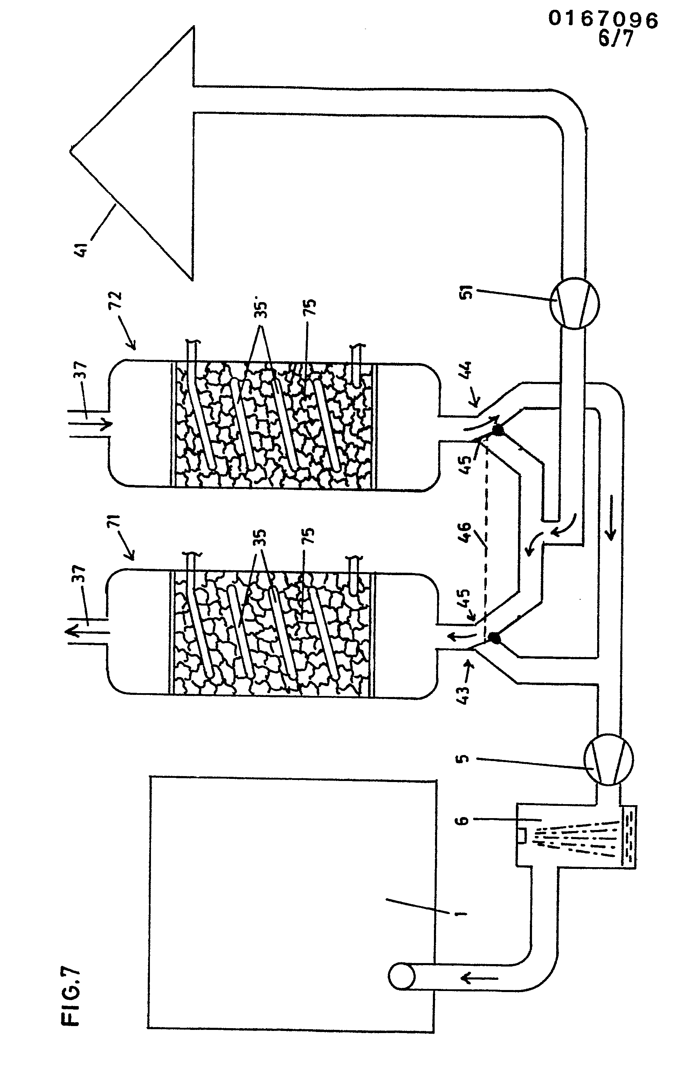

In Fig. 7 ist eine Anlage gezeigt, bei welcher zwei Adsorbergefäße 71,72 vorgesehen sind, von denen jeweils das eine im Kühlkreis, das andere im Regenerationskreis liegt. Als zusätzliche Bauelemente sind hier ein zusätzlicher Ventilator 51 und ein Paar von Weichen 43,44 vorgesehen, deren Luftabsperrklappen 45 durch eine Koppelstange 46 miteinander gekoppelt sind, so daß bei Betätigung der Koppelstange 46 beide Luftabsperrklappen 45 in den Weichen 43,44 gleichzeitig betätigt werden, so daß immer ein Adsorbergefäß 71 oder 72 an die Kühlluftrohrleitung 33, das andere Adsorbergefäß 72 oder 72 an die Regenerationsluftleitung 42 angeschlossen ist.

Die wesentliche technische Bedeutung dieser Erfindung liegt nicht nur darin, daß man durch zusätzlichen Einbau eines als Kühlvorrichtung arbeitenden Wärmetauschers in und/oder unmittelbar hinter dem Adsorber dieselben Apparateteile benutzen kann, um aus der Speicherheizung für den Sommerbetrieb eine Kühlanlage zu machen, insgesamt also eine Vollklimaanlage, sondern auch darin, daß es bei Entfeuchtung des Adsorbers mittels billiger Nachtstromenergie hier - allein für die Kühlanlage gesehen - gelingt, durch Umwandlung und Speicherung von Energie während der Nacht am Tage diese Energie als Kühlenergie zur Verfügung zu haben.

Für die Ausnutzung von Industrieabfallwärmequellen mittels transportabler Adsorbergefäße ist hier eine Möglichkeit gegeben, um auch im Sommer Industrieabfallwärme zu nutzen und in Kühlleistung umzuwandeln.

Die Luftbefeuchtung wird zweckmäßigerweise mit einer besonderen Vorrichtung durchgeführt, die gleichzeitig dem Wärmetausch dient:

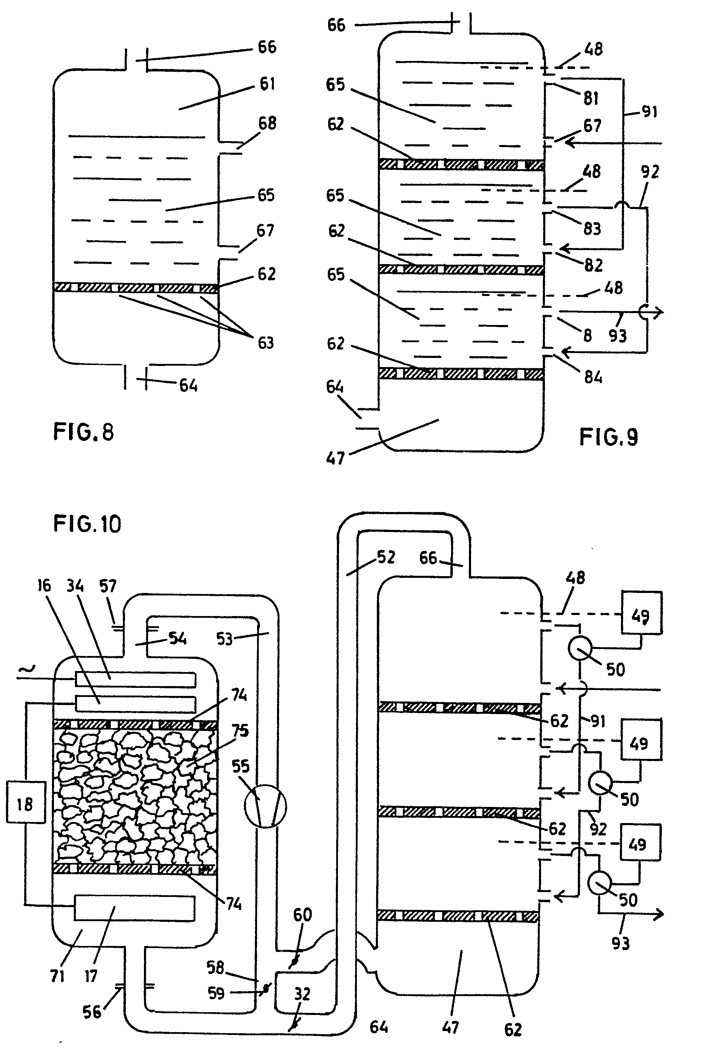

Der geschlossene Behälter 61 der Fig. 8 weist einen Siebboden 62 mit einer Vielzahl von Löchern 63 mit einem Durchmesser von ca. 3 mm auf. Unter diesem Siebboden 62 ist ein Zufuhrstutzen 64 für die Zufuhr von Luft oder Gas vorgesehen, das Wärme abgeben soll. Dieses Gas wird durch ein Gebläse so stark unter Druck gesetzt, daß nur Gas durch die Löcher 3 von unten nach oben durchtritt, nicht aber Wasser 65 von oben nach unten. Das durch die Löcher 63 durchtretende Gas steigt in dem Wasser oberhalb des Siebbodens 62 in Form von Schwärmen von Gasblasen auf, die ihre Wärme an das Wasser abgeben. Durch den Luft- bzw. Gasaustrittsstutzen 66 verläßt das Gas den geschlossenen Behälter 1. Oberhalb des Siebbodens 2 weist der Behälter einen Wasserzulaufstutzen 67 und einen Wasserablaufstutzen 68 auf.

Der Behälter 47 der Fig. 9 weist drei übereinander angeordnete Siebböden 62 auf, über denen jeweils in einer dicken Schicht Wasser 65 steht. Dieses Wasser fließt durch den Zulaufstutzen 67 in den Raum oberhalb des obersten Siebbodens 62 ein, durch den Ablaufstutzen 81 in die Rohrleitung 91 und von dort durch den Einlaufstutzen 82 in den Raum über dem mittleren Siebboden 62. Von dort fließt es durch den Auslaufstutzen 83 in die Rohrleitung 92 und dann über den Einlaufstutzen 84 in den Raum über den untersten Siebboden 62. Aus diesem Raum fließt es durch den Auslaufstutzen 8 in die Rohrleitung 93.

Je höher ein Siebboden 62 angeordnet ist, desto kleiner ist die Durchtrittsfläche, sei es, daß der Lochdurchmesser kleiner wird, sei es, daß die Lochanzahl kleiner wird.

Oberhalb eines jeden Siebbodens 62 ist in bestimmtem Abstand der Geber 48 eines Pegelmeßgerätes angeordnet. Mit diesem wird jeweils ein Ventil 50 gesteuert, welches in der Rohrleitung 91,92,93 angeordnet ist. Diese Ventile dienen dazu, jeweils eine bestimmte Schichthöhe an Wasser über jedem Siebboden 62 aufrechtzuerhalten.

In der Ausführungsform der Fig. 10 ist der Gasaustrittsstutzen 66 mit einem Rohr 52 verbunden, mit dem das Gas in den Adsorberbehälter 71 geleitet wird. Der Gaseintrittsstutzen 64 in dem Wärmetauscher 47 ist mit einem Rohr 53 verbunden, das zum Gasaustrittsstutzen 54 des Adsorberbehälters 71 führt. In diesem lagert zwischen zwei Siebböden 74 die Feuchtigkeit absorbierende Masse 75. Ein Gebläse 55 in der Rohrleitung 53 bewirkt die Umwälzung. Die Masse 75 setzt bei Feuchtigkeitsaufnahme Wärme frei. Der Adsorberbehälter 71 wirkt somit als Wärmespeicher.

Für die Regenerierung kann der Adsorberbehälter 71 an den Anschlüssen 56,57 von den Rohrleitungen 52,53 abgetrennt werden. Ist der Adsorberbehälter 71 stationär, so wird die Regenerierung über eine Heizvorrichtung 16,34, die z.B. mit Nachtstrom gespeist wird, und eine Kondensiervorrichtung 17 vorgenommen, die durch eine Wärmepumpe bzw. Kältemaschine 18 betrieben wird. Die dabei anfallende Wärme wird der Heizvorrichtung 16 zusätzlich zugeführt. Eine
Eine Bypassleitung 58 wird durch Öffnen des Ventiles 54 in Form eines Schiebers oder einer Luftklappe geöffnet, die Ventile 59,60 werden geschlossen, damit der Wärmetauscher 71 abgekoppelt
ist. Das Gebläse 55 wird während der Regeneration
mit umgekehrter Dreh- und Förderrichtung angetrieben.

Liste der Bezugszeichen:

1   zu beheizender Raum
2   Luftansaugstutzen
3   Rohr
4   Luftfilter
5   Gebläse
6   Luftwäscher
7
8   Rohrleitung
9   Ventil
10  Ventil
11  Luftzufuhrstutzen
12  Rohr
13  Rohr
14  Rohr
15  Rohr
16  Lufterhitzungsvorrichtung
17  Kondensationsvorrichtung
18  Wärmepumpe bzw. Kältemaschine
19  Ventil
20  Ventil
21  Ventil
22  Ventil
23  Ventil
24  Ventil
25  Sattelzuganhänger
26  Beheizungsvorrichtung
27  Anschlußstation
28  Anschlußstation
29  Anschlußstation
30  Anschlußstation
31  Rohr
32  Rohr

33 Rohrstück

34 Lufterhitzungsvorrichtung

35 Kühlschlange

36 Kühlschlange

37 Rohrstutzen

38 Leitung

39 Ventil

40 Ventil

41 Dach

42 Rohrleitung

43 Weiche

44 Weiche

45 Luftabsperrklappe

46 Koppelstange

47 Behälter

48 Geber

49 Pegelstandmesser

50 Ventil

51 Ventilator

52 Rohr

53 Rohr

54 Gasaustrittsstutzen

55 Gebläse

56 Anschluß

57 Anschluß

58 Bypaß

59 Ventil

60 Ventil

61 Behälter

62 Siebboden

63 Löcher

64 Zufuhrstutzen

65 Wasser

66 Gasaustrittsstutzen

67 Wasserzulaufstutzen

68 Wasserablaufstutzen
69
70
71 Adsorbergefäß
72 Adsorbergefäß
73 Adsorbergefäß
74 gelochter Boden
75 Adsorbtionsmaterial
76
77
78
79
80
81 Ablaufstutzen
82 Einlaufstutzen
83 Auslaufstutzen
84 Einlaufstutzen
85
86
87
88
89
90
91 Rohrleitung
92 Rohrleitung
93 Rohrleitung

- 1 -

Patentansprüche:

1. Klimaanlage mit einer Speicherheizung, bestehend aus mindestens einem Gebläse,
dadurch gekennzeichnet,
daß das Speicherelement (71,72,73) ein Adsorber in Form eines Gefäßes ist, in dem sich ein Feuchtigkeit aus Luft adsorbierendes Material befindet,
und daß dieser Adsorber (71,72,73) in zwei Rohrleitungskreise geschaltet ist,
einen Rohrleitungskreis für den Heizbetrieb, mit einem Lufteinlaß (2) und einem Luftbefeuchter (6), vorzugsweise ein Luftwäscher, vor dem Adsorber (71,72,73) und einem Luftauslaß (11) in den zu beheizenden Raum (1) sowie einem Gebläse (5),
und einem zweiten Rohrleitungskreis für die Regenerierung mit einem Lufterhitzer (16), einer Kondensiervorrichtung (17) und ebenfalls einem Gebläse (5), wobei in den Rohrleitungskreisen Ventile (9,10,19,20,34) angeordnet sind, die entweder den einen oder den anderen Rohrleitungskreis an den Adsorber schalten.

2. Klimaanlage nach Anspruch 1,
dadurch gekennzeichnet,
daß in beiden Rohrleitungskreisen ein und dasselbe Gebläse (5) montiert ist
und daß Ventile (9,10,19,20,34) vorgesehen sind, mit denen das Gebläse (5) in den einen oder den anderen Rohrleitungskreis einschaltbar ist.

3. Klimaanlage nach Anspruch 1,
   dadurch gekennzeichnet,
   daß mehrere Speicherelemente (71,72,73) nebeneinander aufgestellt sind und Ventile (21,22,23)
   vorgesehen sind, mit denen jeweils ein Speicher
   (71,72,73) nach dem anderen in den ersten Rohrleitungskreis (I) einschaltbar ist.


4. Klimaanlage nach Anspruch 1,
   dadurch gekennzeichnet,
   daß die Speicherelemente (71,72,73) auf beweglichen Untersätzen (25) montiert sind und die
   beiden Rohrleitungskreise (I,II) räumlich entfernt voneinander angeordnet sind.


5. Klimaanlage nach Anspruch 1,
   dadurch gekennzeichnet,
   daß in jedem Gefäß (71,72,73) eines Speicherelementes auf einer Seite eine Beheizungsvorrichtung (16) - vorzugsweise oben -, auf der
   gegenüberliegenden Seite eine Kondensationsvorrichtung (17) - vorzugsweise unten - vorgesehen ist.


6. Klimaanlage nach Anspruch 1,
   dadurch gekennzeichnet,
   daß die Kondensationsvorrichtung (17) als Wärmetauscher ausgebildet ist,
   und daß vorzugsweise zwischen Kondensationsvorrichtung (17) und Heizvorrichtung (16) eines
   Speicherelementes (71,72,73) eine Wärmepumpe
   (18) geschaltet ist.

7. Klimaanlage nach Anspruch 1,
dadurch gekennzeichnet,
daß der Lufteinlaß (2) des ersten Rohrleitungskreises im zu beheizenden Raum (1) angeordnet ist, wobei vorzugsweise dem Lufteinlaß (2) ein Luftfilter (4) nachgeschaltet ist.

8. Klimaanlage nach Anspruch 1,
dadurch gekennzeichnet,
daß der Adsorber (71,72,73) in einen dritten Rohrleitungskreis geschaltet oder schaltbar ist, in welchem vor dem Adsorber (71,72,73) eine Ansaugvorrichtung für Umgebungsluft oder Raumluft angeordnet ist, und daß in dem Adsorber (71,72,73) oder unmittelbar hinter dem Adsorber (71,72,73) ein Wärmetauscher (35,36) als Kühlvorrichtung zur Abführung der beim Trocknungsvorgang freigesetzten Wärme, vorzugsweise in Form einer Kühlrohrschlange (35), angeordnet ist und hinter dem Adsorber (71,72,73) und der Kühlvorrichtung (35,36), die vorzugsweise als Brauchwassererwärmer ausgebildet sein kann, ein Luftbefeuchter (6) angeordnet ist.

9. Klimaanlage nach Anspruch 8,
dadurch gekennzeichnet,
daß mindestens zwei Adsorbergefäße (71,72,73) vorhanden sind, von denen das eine in den dritten Rohrleitungskreis und das andere in den zweiten Rohrleitungskreis geschaltet ist.

10. Klimaanlage nach Anspruch 9,
dadurch gekennzeichnet,
daß der Lufterhitzer des zweiten Rohrleitungskreises eine solare Energie in Wärme umsetzende Vorrichtung ist oder daß der Lufterhitzer des zweiten Rohrleitungskreises eine Abfallwärmequelle ist.

11. Klimaanlage nach Anspruch 1,
dadurch gekennzeichnet,
daß das als Wärme und Feuchtigkeit tauschendes Bauelement dienende Gefäß (61), in dem Wasser (65) und Luft mit einer Grenzfläche zwischen beiden enthalten sind, mindestens einen Siebboden (62) enthält,
daß oberhalb jedes Siebbodens (62) ein Zulauf- (67) und ein Ablaufstutzen (68) für Wasser angeordnet ist
und daß unter dem untersten Siebboden (62) ein Luftzufuhrstutzen (64) angeordnet ist,
wobei vorzugsweise das Gefäß (61) geschlossen ist
und daß über dem obersten Siebboden (62) ein Luftabfuhrstutzen (66) angeordnet ist.

12. Klimaanlage nach Anspruch 11,
dadurch gekennzeichnet,
daß jeweils ein in einer höheren Etage angeordneter Wasserablaufstutzen mit einem in einer daruntergelegenen Etage, die durch zwei übereinander liegende Siebböden (62) gebildet ist, angeordneten Wasserzulaufstutzen verbunden ist.

13. Klimaanlage nach Anspruch 12,
dadurch gekennzeichnet,
daß in vorgegebenem Abstand oberhalb jedes Siebbodens (62) ein Geber (48) eines Pegelmeßgerätes (49) angeordnet ist und daß in der Leitung (91,92,93), die vom darüber angeordneten Siebboden (62) in den Raum unterhalb dieses Siebbodens (62) führt, ein diesem Pegelmeßgerät (49) zugeordnetes Ventil (50) angeordnet ist.

14. Klimaanlage nach Anspruch 11, dadurch gekennzeichnet, daß der Luftabfuhrstutzen (66) des Siebbodengefäßes (47) mit dem Lufteingangsstutzen eines Adsorbergefäßes (71) verbunden ist, das mit einem der Luft Feuchtigkeit entziehenden Material (75), das beim Feuchtigkeitsentzug Wärme abgibt, gefüllt ist, und daß der Lufteingangsstutzen (64) des Siebbodengefäßes (47) mit dem Luftausgangsstutzen (54) des Adsorbergefäßes (71) verbunden ist.

FIG.1

FIG. 2

FIG.3

FIG.4

FIG.5

74

71

41

35

75

36

1

6

74

33  39  5  40  42

FIG.6

74

71

41

35

75

36

1

6

74

33  39  5  40  42

# FIG.7

FIG.8

FIG.9

FIG.10